# EUROPÄISCHE PATENTSCHRIFT

(11) **EP 1 332 035 B1**
(45) Veröffentlichungstag und Bekanntmachung des Hinweises auf die Patenterteilung: **20.07.2005**
(21) Anmeldenummer: 01966795.5
(22) Anmeldetag: 19.09.2001
(51) Int. Cl.: B29C 47/68

(54) **VORRICHTUNG UND VERFAHREN ZUR FILTRIERUNG VISKOSEN MATERIALES**
DEVICE AND METHOD FOR THE FILTRATION OF VISCOUS MATERIAL
DISPOSITIF ET PROCEDE POUR FILTRER UNE MATIERE VISQUEUSE

(30) Priorität: 26.09.2000 AT 16272000
(43) Veröffentlichungstag der Anmeldung: 06.08.2003
(73) Patentinhaber: Bacher, Helmut, 4490 St. Florian (AT); Schulz, Helmuth, 4020 Linz (AT); Wendelin, Georg, 4033 Linz (AT)
(72) Erfinder: Bacher, Helmut, 4490 St. Florian (AT); Schulz, Helmuth, 4020 Linz (AT); Wendelin, Georg, 4033 Linz (AT)
(74) Vertreter: Wildhack, Helmut, Dipl.-Ing. Dr.
(86) Internationale Anmeldenummer: PCT/AT2001/000296
(87) Internationale Veröffentlichungsnummer: WO 2002/026472

(56) Entgegenhaltungen:
- EP-A- 0 221 355
- EP-A- 0 976 525
- US-A- 3 706 827
- US-A- 4 410 477
- PATENT ABSTRACTS OF JAPAN vol. 1996, no. 10, 31. Oktober 1996 (1996-10-31) & JP 08 156072 A (TANAKA KAZUYUKI), 18. Juni 1996 (1996-06-18)

## Beschreibung

Die Erfindung bezieht sich auf eine Vorrichtung zur Filtrierung viskosen Materiales, insbesondere thermoplastischen Kunststoffmateriales, mit einer Einrichtung, insbesondere einer Schnecke, welche das zu reinigende Material aus einem Zustromkanal eines Zulaufgehäuses gegen ein bandförmiges Sieb drückt, das abstromseitig durch eine Lochplatte gegen den Druck des zuströmenden Materiales abgestützt und quer zur Flußrichtung des zu reinigenden Materiales zwecks Ersatzes eines verunreinigten Bandabschnittes durch einen neuen Bandabschnitt verschiebbar ist, wobei eine Einrichtung zur Erleichterung dieser Verschiebung vorhanden ist, welche Einrichtung einen an den Zustromkanal angeschlossenen Speicherraum für zu reinigendes Material aufweist, in welchem Speicherraum ein Kolben dichtend geführt ist, der durch einen Antrieb hin und her bewegbar ist und in seiner vorgeschobenen Stellung den Speicherraum gegen den Zustromkanal abschließt. Weiters bezieht sich die Erfindung auf ein Verfahren zur Filterung viskosen materiales, gemäß dem Oberbegriff des Anspruchs 11.

Bei einer bekannten Vorrichtung dieser Art (EP 221 355 B) wird zur Erleichterung der Verschiebung des Bandes der Raum vor dem Sieb zeitweise volumenmäßig verändert, sodass der durch das zu reinigende Material auf das Sieb ausgeübte Druck aufgrund dieser Volumenänderung derart geändert wird, dass der Weitertransport des Siebes möglich ist. Der hierfür erforderliche Aufwand ist beträchtlich und es ist diese Vorrichtung auch nicht einfach zu bedienen, denn die Volumenvergrößerung des Raumes vor dem Sieb muss auf den Zulauf des zu filtrierenden Materiales abgestimmt werden. Dieser Zulauf ist aber nicht immer gleichmäßig, z.B. dann nicht, wenn die das zu filtrierende Material zuführende Schnecke ungleichmäßig befüttert wird.

Die Erfindung setzt sich zur Aufgabe, eine Vorrichtung der eingangs geschilderten Art so zu verbessern, dass die erwähnten Nachteile vermieden sind und die Einrichtung bei geringem konstruktiven Aufwand in einfacher, verläßlicher Weise bedienbar ist. Die Erfindung löst diese Aufgabe dadurch, dass die Einrichtung zur Erleichterung der Verschiebung des Siebes zusätzlich zum Kolben des Speicherraums eine zustromseitig des Siebes angeordnete Verschlusseinrichtung aufweist, durch welche der Zustromkanal für das zu filtrierende Material zumindest großteils absperrbar ist, und welche - in Flußrichtung des zu reinigenden Materiales gesehen - zwischen dem Speicherraum und dem Sieb angeordnet ist. Der konstruktive Aufwand reduziert sich daher auf die Verschlusseinrichtung und den Speicherraum mit dem in ihm geführten Kolben. Diese Bauteile sind einfach herzustellen, gegebenenfalls können handelsübliche Bauelemente Verwendung finden. Diese Konstruktion ist auch einfach zu bedienen. Soll der verschmutzte Siebbandabschnitt ersetzt werden, so braucht lediglich die Verschlusseinrichtung so weit in die Verschlussstellung gebracht zu werden, dass der durch das zu filtrierende Material auf das Sieb ausgeübte Druck so weit reduziert wird, dass eine Verschiebung des Siebes möglich ist. Der durch die Verschlusseinrichtung bewirkte Stau auf der Zustromseite der Verschlusseinrichtung wird dadurch aufgenommen, dass der ursprünglich in seiner vorgeschobenen Stellung befindliche Kolben zurückgezogen wird, sodass der Inhalt des Speicherraumes zur Aufnahme des zuströmenden, zu filtrierenden Materiales freigegeben wird. Soferne nur dieser Speicherraum genügend groß bemessen ist, kann der Siebpartiewechsel bei weiterhin ungestört verlaufender Zuförderung des zu filtrierenden Materiales erfolgen und die erfindungsgemäße Vorrichtung ist unabhängig von Ungleichmäßigkeiten im Zustrom des zu filtrierenden Materiales. Sobald der verschmutzte Bandabschnitt durch einen neuen Bandabschnitt ersetzt ist, wird die Verschlusseinrichtung wieder geöffnet, sodass der Zustrom zu filtrierenden Materiales zum Sieb wieder freigegeben ist. Zugleich wird der Kolben wieder in seine vorgeschobene Stellung bewegt und drückt hierbei das im Speicherraum befindliche verschmutzte Material aus dem Speicherraum aus. Vorteilhaft ist hierbei, dass sich die aus dem Speicherraum ausgedrückte Masse wieder mit der über den Zustromkanal zugeführten, zu filtrierenden Masse vermischt, sodass der Massestrom, welcher zum Filter gelangt, sehr gut homogenisiert wird. Es kann daher kein verschmutztes Material hinter das Filter gelangen.

Insbesondere bei der Filtrierung thermoplastischen Kunststoffmateriales treten hohe Drücke im zu filtrierenden Material auf, welche 300 bar und mehr erreichen können. Diese hohen Drücke wirken auf das Sieb und drücken es gegen die Lochplatte. Die dadurch bedingten Reibungskräfte erschweren den Weitertransport des Siebes zwecks Ersatzes einer verschmutzten Bandstrecke. Gerade bei solchen, unter Hochdruck arbeitenden Vorrichtungen bietet die Erfindung wesentliche Vorteile, wenngleich sie selbstverständlich auch bei Vorrichtungen mit Vorteil anwendbar ist, welche mit niedrigeren Drücken arbeiten, etwa zur Filtrierung von Obst- oder Gemüsesäften, usw. Während bei letzteren Anwendungsgebieten die gleichmäßige Zuförderung zu filtrierenden Materiales nicht so bedeutsam ist, sodass die dieses Material im Zustromkanal fördemde Einrichtung beispielsweise von einem oder mehreren, in diesen Kanal fördernden Schiebern bzw. Kolben gebildet sein kann, ist bei der Filtrierung von Kunststoffmaterial, insbesondere thermoplastischem Kunststoffmaterial, eine gleichmäßige Zuförderung dieses Materiales zum Filtersieb anzustreben, da zumeist das filtrierte Material einer dem Sieb nachgeschalteten Granuliervorrichtung oder über einen Extruder zumindest einer Form zugeführt wird. Eine ungleichmäßige Zuförderung des Materiales zum Sieb hätte daher eine ungleichmäßige Material- bzw. Produktqualität an der Granuliervorrichtung bzw. in der Form zur Folge. Bei Kunststoff filtrierenden Vorrichtungen wird daher als Einrichtung zur Förderung des zu filtrierenden Materiales im Zustromkanal stets eine Schnecke verwendet. Hierbei ist gemäß einer bevorzugten Ausführungsform der Erfindung die Anordnung so getroffen, dass die dem Zustromkanal zugewendete Stirnfläche des Kolbens gleich geformt ist wie die Innenwand des Gehäuses der Schnecke, sodass in der vorgeschobenen Stellung des unverdrehbaren Kolbens dessen Stirnfläche von den Gängen der Schnecke bestrichen wird. Dies hat zur Konsequenz, dass nach jedem Speichervorgang der gesamte Speicherinhalt der Filtrierung zugeführt wird und keine Kunststoffreste an der Stirnfläche des Kolbens verbleiben können. Eine thermische Schädigung des zu filtrierenden Materiales ist daher zumindest weitgehend vermieden und ist umso geringer, je rascher der Ersatz der verschmutzten Siebbandstrecke durchgeführt wird. Dies erfordert, dass die Reibungskräfte, welche auf das Sieb beim Vorschubvorgang wirken, so gering wie möglich gehalten werden. Dies wiederum hat zur Konsequenz, dass die zur Erzielung der nötigen Dichtheit des Zustromkanales erforderliche Abdichtung der im Filtervorgang begriffenen Bandstrecke des Bandfilters aufgehoben wird. Um dies im Rahmen der Erfindung durchzuführen, ist gemäß einer Weiterbildung der Erfindung die Anordnung so getroffen, dass die Lochplatte oder ein zu ihrer Halterung dienender Lochplattenträger durch eine lösbare Spanneinrichtung gegen das Zulaufgehäuse gedrückt wird, wobei das zwischen Lochplattenträger und Zulaufgehäuse hindurchgeführte Sieb in der Spannstellung der Spanneinrichtung dicht gehalten ist. Wird diese Spannstellung der Spanneinrichtung aufgehoben, so wird die Abdichtung der zuvor für die Filtrierung benutzten Siebbandstrecke aufgehoben und es kann diese Siebbandsstrecke problemlos verschoben werden, zumal diese Siebbandstrecke auch nicht mehr gegen die Lochplatte angedrückt wird, da ja die Überführung der Verschlusseinrichtung in die Schließstellung bewirkt, dass auf der Zustromseite des Siebes der Druck wesentlich abgesenkt, bei völligem Abschluß sogar auf Null reduziert wird. Wenn erfindungsgemäß die Spanneinrichtung von Hydraulikzylindern gebildet ist, läßt sich die Aufhebung der Spannstellung der Spanneinrichtung in ganz kurzer Zeit durchführen, sodass bei zweckmäßiger Abstimmung der Bewegungen von Verschlusseinrichtung, Kolben- und Siebvorschub, der Ersatz der verschmutzten Bandstrecke und die erneute Abdichtung der Siebpartie und die Rückführung von Verschlusseinrichtung und Kolben kurzfristig durchführbar sind. Je rascher diese Vorgänge durchgeführt werden, desto geringer ist die Gefahr einer thermischen Schädigung des behandelten Materiales.

Die Verschlusseinrichtung kann im Prinzip von jedem geeigneten Ventil gebildet sein, eine besonders zweckmäßige Ausführungsform ist jedoch ein quer zur Achse des Zustromkanales beweglicher Schieber. Dessen Bewegungsrichtung wird zweckmäßig parallel zu jener des Kolbens für den Speicherraum gewählt, da eine solche Anordnung es ermöglicht, die Bewegungen des Schiebers und des Speicherraumkolbens in einfacher Weise von einem einzigen Antrieb abzuleiten.

Es hat sich als zweckmäßig erwiesen, an der dem Sieb zugewandten Seite der Lochplatte eine flache Mulde vorzusehen. In diese Mulde legt sich das Sieb durch den Massedruck hinein, die hierbei auftretende geringfügige Dehnung des Siebes liegt im Bereich der Verformbarkeit des das Sieb bildenden Drahtgewebes. Auf diese Weise wird zustromseitig ein Schmutzaufnahmeraum geschaffen.

Das erfindungsgemäße Verfahren zum Siebabschnittwechsel bei der Filterung viskosen Materiales, insbesondere in den strömungsfähigen Zustand versetzten Kunststoffmateriales, geht aus von einer Vorgangsweise, bei welcher das Material in einem Zustromkanal mittels einer Fördereinrichtung, insbesondere einer Schnecke, unter Druck der Zustromseite eines bandförmigen Filtersiebes zugeführt wird, von welchem ein Abschnitt während des Filtriervorganges nach außen abgedichtet gehalten wird, wogegen beim Siebabschnittwechsel die Abdichtung des Siebbandes aufgehoben und dann das Siebband quer zur Fließrichtung des zu filtrierenden Materiales verschoben wird, bis der verschmutzte Bandabschnitt durch einen neuen Bandabschnitt ersetzt ist, worauf dann die Abdichtung dieses neuen Bandabschnittes nach außen wieder hergestellt wird, wobei während der Verschiebung des Siebbandes das Einströmen des zu filtrierenden Materiales in einen an den Zustromkanal angeschlossenen Speicherraum ermöglicht wird. Die erfindungsgemäße Vorgangsweise ist dadurch gekennzeichnet, dass der Zustrom zu filtrierenden Materiales zum Siebband stark gedrosselt, vorzugsweise ganz abgesperrt, wird, dass im wesentlichen zeitgleich hiemit zustromseitig der Drossel- bzw. Absperrstelle das Einströmen des zu filtrierenden Materiales in den Speicherraum ermöglicht wird, und kurz nach Drosselung bzw. Absperrung des Zustromes zum Siebband dessen Abdichtung aufgehoben und das Sieb verschoben wird, worauf nach Wiederherstellung der Bandabdichtung der Zustrom des zu filtrierenden Materiales zum Siebband wieder freigegeben wird, wobei das in den Speicherraum eingetretene Material aus dem Speicherraum ausgetrieben und zustromseitig der Drossel- bzw. Absperrstelle in den zum Siebband strömenden Materialfluss wieder eingebracht wird. Eine solche Vorgangsweise ist einfach durchzuführen und zu überwachen. Für hohe, im zu filtrierenden Material auftretende Drücke empfiehlt sich die völlige Unterbrechung des Zustroms zum Siebband, um einen Austritt des Materiales nach Aufhebung der Abdichtung des Siebbandes zu vermeiden.

In der Zeichnung ist ein Ausführungsbeispiel der erfindungsgemäßen Vorrichtung schematisch dargestellt. Fig. 1 zeigt die Vorrichtung in einem Horizontalschnitt. Die Fig. 2 und 3 zeigen im Horizontalschnitt bzw. im Vertikalschnitt je ein Detail in größerem Maßstab. Fig. 4 ist ein Schnitt durch die Abdichtungsstelle des Siebes, in dessen Laufrichtung gesehen. Die Fig. 5 und 6 zeigen je eine Ausführungsvariante für die Abdichtung des Siebes, normal zu dessen Ebene gesehen.

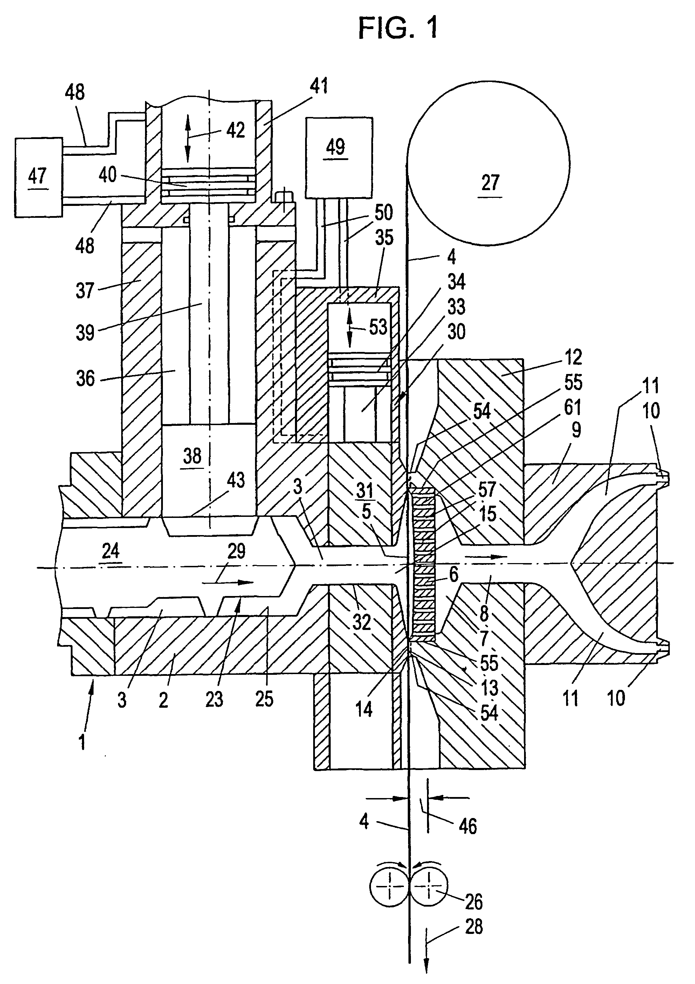

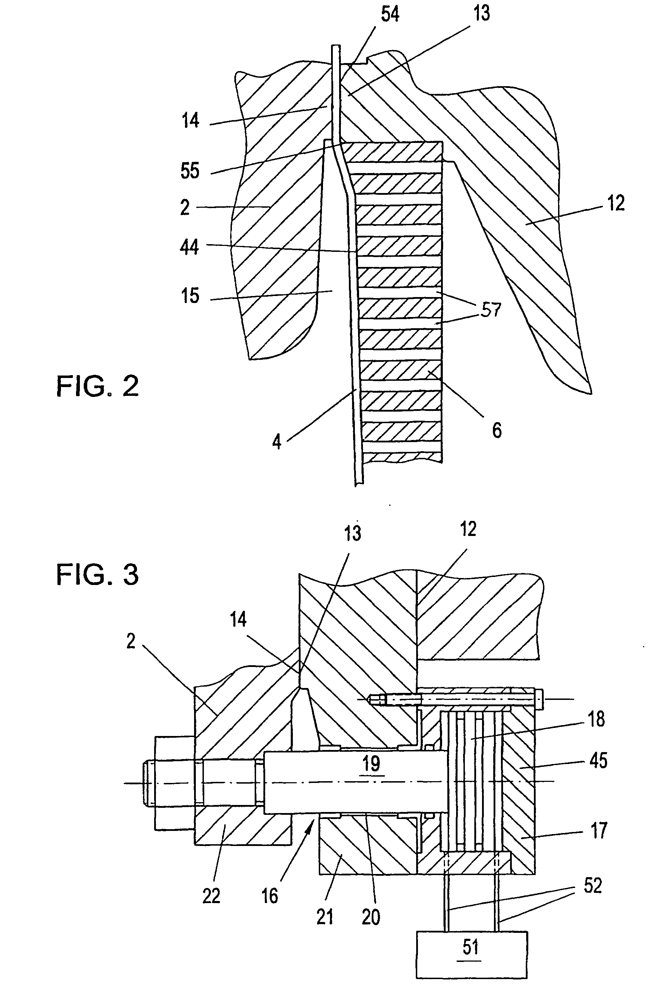

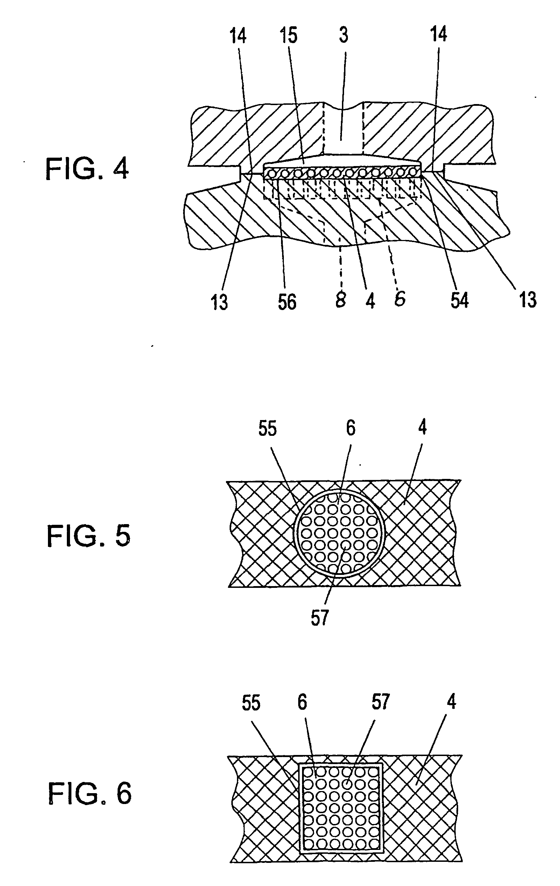

Die Vorrichtung hat ein nur teilweise dargestelltes Gestell 1, welches ein Zulaufgehäuse 2 trägt. In diesem Gehäuse 2 ist ein Zustromkanal 3 vorgesehen, durch welchen das zu filtrierende Material gegen ein bandförmiges Sieb 4 gedrückt wird, welches aus einem gewebten Metallnetz besteht, dessen Maschen so fein sind, dass die aus dem zu filtrierenden Material abzuscheidenden Verunreinigungen an der Zustromseite des Siebes 4 zurückgehalten werden. Bei der Filtrierung thermoplastischer Kunststoffmassen, insbesondere Recyclingmaterials, sind diese Verunreinigungen zumeist von Staub oder kleinen Steinchen gebildet, es kommen jedoch auch Metallteile vor, wie Büro- oder Heftklammern, kleine Schrauben, Nägel usw. sowie Feststoffteilchen anderer Art. Da das zu filtrierende Material unter mehr oder weniger hohem Druck durch den Zustromkanal 3 zugeführt wird, ist das Sieb 4 in seinem gerade wirksamen Abschnitt 5 durch eine Lochplatte 6 abgestützt, deren Löcher 57 genügend groß sind, um das durch das Sieb 4 hindurchgetretene Filtrat ungehindert passieren zu lassen. Dieses Filtrat gelangt durch die Löcher der Lochplatte 6 in einen dahinterliegenden Sammelraum 7 und strömt von diesem durch einen Kanal 8 zu einem Granulierkopf 9, der mehrere zu Düsen 10 führende Verzweigungskanäle 11 aufweist. An die Düsen 10 kann eine nicht dargestellte Granuliervorrichtung angeschlossen sein, welche die aus den Düsen 10 austretenden Materialstränge in Granulatteilchen zerteilt und diese nach Kühlung abführt. Die Lochplatte 6 ist in einem Lochplattenträger 12 gehaltert, welcher um die Lochplatte 6 einen z.B. ringförmigen Steg 13 bildet, über dessen Stirnfläche 56 (Fig. 4) das Sieb 4 in einer Vertiefung 54 dieser Stirnfläche 56 geführt ist. Diesem Steg 13 liegt ein z.B. ringförmiger Steg 14 gegenüber, welcher von der dem Sieb 4 zugewendeten Stirnfläche des Zulaufgehäuses 2 gebildet wird. Dieser Steg 14 begrenzt eine trichterförmige Erweiterung 15, in welche der Zustromkanal 3 mündet, und deren größte Abmessung gleich ist jener der Abmessung der Lochplatte 6. Zwischen den beiden Stegen 13, 14 liegt das Sieb 4. Um zu verhindern, dass zu filtrierendes Material, welches zumeist unter mehr oder weniger hohem Druck zugeführt wird, zwischen den Stegen 13, 14 nach außen austritt, sind die Stege 13, 14 gegeneinander gedrückt und klemmen dadurch das in der Vertiefung 54 zwischen ihnen liegende Sieb 4 dichtend ein. Hierzu dient eine lösbare Spanneinrichtung 16 (Fig. 3), welche Hydraulikzylinder 17 aufweist, in denen Hydraulikkolben 18 geführt sind, die durch einen Antrieb 51 über Hydraulikleitungen 52 betätigt werden. Die Kolben 18 sind mit Stangen 19 verbunden, die durch Bohrungen 20 in einem Flansch 21 des Lochplattenträgers 12 hindurchgeführt sind und an einem Flansch 22 des Zulaufgehäuses 2 angeschraubt sind. Wenn die Kolben 18 in den Zylindern 17 nach rechts bewegt werden, dann werden die beiden Flansche 21, 22 gegeneinander gezogen, sodass das zwischen den Stegen 13, 14 liegende Sieb 4 dichtend eingeklemmt und ein Austritt des zu filtrierenden Materiales aus der Erweiterung 15 (Fig. 1) nach außen verhindert ist. Um das zu filtrierende Material unter Druck zuführen zu können, ist eine Zufuhreinrichtung 23 vorhanden, die in der dargestellten Ausführungsform als Schnecke 24 ausgebildet ist, die in einer Bohrung 25 des Zulaufgehäuses 2 gelagert ist und das zu filtrierende Material in Richtung des Pfeiles 29 fördert. Thermoplastisches Kunststoffmaterial wird hierbei plastifiziert und dadurch in einen filtrierfähigen Zustand gebracht.

Eine Variante für die Abdichtung des Siebes 4 besteht darin, den Rand 55 der Lochplatte 6 als Dichtfläche auszubilden, wobei der Steg 13 eine zusätzliche Dichtwirkung ausüben kann, jedoch nicht muss. In einem solchen Fall könnte die Spanneinrichtung 16 mit ihrem Hydraulikzylinder 17 direkt auf die Lochplatte 6 wirken, sodass der Granulierkopf 9 und der Lochplattenträger 12 ihre Lage beim Verschieben des Siebdruckes 4 nicht ändern müssen. Zwei Ausführungsbeispiele für eine solche, das Sieb 4 abdichtende Lochplatte 6 sind in den Fig. 5 und 6 dargestellt. Die Ausführungsform nach Fig. 6 ist günstiger als jene nach Fig. 5, da der viereckige Querschnitt der Lochplatte 6 die aktive Siebfläche besser ausnützt.

Die vom Sieb 4 abgeschiedenen Verunreinigungen im zuströmenden Material sammeln sich auf der Zustromseite des Siebes 4 an und bewirken mit der Zeit, dass der wirksame Siebabschnitt mehr und mehr verlegt und daher in seiner Siebwirkung beeinträchtigt wird. Daher muss dieser verschmutzte Siebabschnitt von Zeit zu Zeit durch einen neuen Siebabschnitt ersetzt werden. Hierzu wird das auf einer Siebrolle 27 aufgewickelte bandförmige Sieb 4 mittels einer Abzugseinrichtung 26 in Richtung des Pfeiles 28 so weit verschoben, dass der verschmutzte Bandabschnitt durch einen neuen Bandabschnitt ersetzt ist. Vor Durchführung dieser Vorschubbewegung wird jedoch die Spanneinrichtung 26 gelöst, da ansonsten die Einspannung des Siebes zwischen den Stegen 13, 14 den Transport des Siebes verhindern oder zumindest stark behindern würde. Die Gefahr eines Abreißens des Siebes wäre dann gegeben. Die Entspannung der Spanneinrichtung 26 erfolgt durch Beaufschlagung des Hydraulikkolbens 18 so, dass die Stangen 19 nach links (Fig. 3) verschoben werden.

Um zu verhindern, dass das unter Druck stehende, zu filtrierende Material nach Lösung der dichtenden Einspannung des Siebes 4 zwischen den Stegen 13, 14 aus dem von der Erweiterung 15 gebildeten Raum nach außen austritt, ist eine Verschlusseinrichtung 30 vorgesehen, die zustromseitig des Siebes 4 angeordnet ist und von einem quer zur Längsachse des Zustromkanales 3 beweglichen Schieber 31 gebildet ist, der eine Durchgangsöffnung 32 hat, die in der Offenstellung der Verschtusseinrichtung 30 den Zustromkanal 3 mit der Erweiterung 15 verbindet. Der Schieber 31 ist mittels einer Kolbenstange 33 mit dem Kolben 34 eines Hydraulikzylinders 35 verbunden, der an einen Antrieb 49 mit Hydraulikleitungen 50 angeschlossen ist. Dadurch kann der Schieber 31 in Richtung des Doppelpfeiles 53 aus der in Fig. 1 dargestellten Offenstellung in eine Stellung verschoben werden, in welcher er den Zustromkanal 3 großteils oder völlig absperrt, bzw. wieder zurück in die Offenstellung. Diese Absperrung hat zur Folge, dass der Druck des in der Erweiterung 15 befindlichen Materiales, welcher Druck in der Betriebsstellung der Vorrichtung das Sieb 4 gegen die es abstützende Lochplatte 6 drückt, stark abgesenkt oder völlig aufgehoben wird, da ein weitgehender oder völliger Druckausgleich zwischen den in den Räumen 15 und 8 befindlichen Materialmengen auftritt. Wird in der Verschlussstellung der Verschlusseinrichtung 30 die Spanneinrichtung 16 gelöst, so kann somit das Sieb 4 mittels der Abzugseinrichtung 26 problemlos weiterbewegt werden, bis die verschmutzte Bandstrecke durch eine neue Bandstrecke ersetzt ist.

Wenn die Verschlusseinrichtung 30 in die Absperrstellung gebracht ist, kann das von der Schnecke 24 geförderte Material nicht weiter in Richtung des Pfeiles 29 strömen. Um zu vermeiden, dass die Schnecke 24 stillgesetzt werden muss, was unerwünscht ist, ist an den Zustromkanal 3 ein Speicherraum 36 angeschlossen, welcher von einem Zylinder 37 begrenzt ist, in welchem ein Kolben 38 dichtend geführt ist, der mittels einer Kolbenstange 39 mit einem Hydraulikkolben 40 verbunden ist, der in einem Hydraulikzylinder 41 geführt ist. Zur Verschiebung dieses Kolbens 40 in Richtung des Doppelpfeiles 42 dient ein Antrieb 47, dessen Hydraulikleitungen mit 48 bezeichnet sind.

Wenn der Schieber 31 in seine Absperrstellung gebracht ist, wird zugleich der Kolben 38 zurückgezogen, sodass der Speicherraum 36 für den Einstrom des von der Schnecke 24 geförderten Materiales freigegeben wird. Der Speicherraum 36 ist so bemessen, dass er während der Absperrstellung des Schiebers 31 das gesamte, von der Schnecke 24 geförderte Material aufnehmen kann. Sobald der Schieber 31 wieder in die Offenstellung geführt ist, wird der Kolben 38 wieder vorgeschoben und drückt daher das im Speicherraum 36 befindliche Material aus diesem Raum wieder aus. Die hierbei ausgedrückte Materialmenge gelangt in den von der Schnecke 24 geförderten Materialstrom und mischt sich mit diesem, sodass stets annähernd homogenes Material zur Filtrierung gelangt.

In der in Fig. 1 dargestellten, vorgeschobenen Stellung des Kolbens 38 bildet dessen Stirnfläche 43 eine glatte Fortsetzung der von der Bohrung 25 gebildeten Innenwand des Gehäuses der Schnecke 24. Dies hat den Vorteil, dass bei der Drehung der Schnecke 24 ihre Schneckengänge die Stirnfläche 43 bestreichen und daher an dieser Stirnfläche anhaftendes Material abstreifen. Dadurch wird vermieden, dass Materiatreste unzulässig lange im Zustromkanal 3 verbleiben. Einzige Voraussetzung hiefür ist, dass der Kolben 38 nicht um die Längsachse des Speicherraumes 36 verdrehbar ist, was konstruktiv keinerlei Schwierigkeiten bedeutet.

Die Lochplatte 6 (Fig. 2) hat an ihrer Zustromseite eine flache Mulde 44, in welche sich das Sieb 4 durch den Massedruck hineinlegt. Die geringfügige Dehnung des Siebes 4 liegt im Bereich der Verformbarkeit des Drahtgewebes. Diese Mulde bildet einen zustromseitig des Siebes 4 gebildeten Schmutzaufnahmeraum.

Die taktweise Verschiebung des Siebes 4 in Richtung des Pfeiles 28 wird dadurch erleichtert, dass das Zulaufgehäuse 2 und der Lochplattenträger 12 relativ zueinander in Axialrichtung des Zustromkanales 3 verschiebbar sind. Für diese Verschiebung kann die Spanneinrichtung 16 herangezogen werden, wenn nur der Hydraulikkolben 18 im Hydraulikzylinder 17 so beaufschlagt werden kann, dass er an der Stirnwand 45 des Hydraulikzylinders 17 anliegt. Da die Stange 19 am Flansch 22 des Zulaufgehäuses 2 angeschraubt ist, bewirkt die erwähnte Anlage, dass der Flansch 21 und damit der Lochplattenträger 12 vom Zulaufgehäuse 2 weggezogen wird. Es entsteht dann zwischen den Stegen 13, 14 ein genügend großer Spalt, um das Sieb 4 samt der zustromseitig an ihm anhaftenden Schmutzschicht problemlos abziehen zu können. Die diesen Spalt bildende Verschiebestrecke 46 ist in Fig. 1 schematisch dargestellt.

Fig. 1 zeigt die Betriebsstellung der Vorrichtung, in welcher das mittels der Schnecke 24 geförderte Material gefiltert wird. Soll der verschmutzte Bandabschnitt ersetzt werden, so wird zunächst der Schieber 31 in die Verschlussstellung gebracht und dadurch der Materialzustrom zum Sieb 4 zumindest im wesentlichen unterbunden. Etwa zeitgleich wird der Kolben 38 zurückgezogen, um den Speicherraum 36 zur Aufnahme des von der Schnecke 24 geförderten Materiales freizugeben. Sobald der Schieber 31 seine Verschlussstellung erreicht hat, wird die Spannvorrichtung so betätigt, dass das Zulaufgehäuse 2 und der Lochplattenträger 12 voneinander entfernt werden. Dadurch wird die Einklemmung des Siebes 4 an den Stegen 13, 14 bzw. dem Rand 55 der Lochplatte 6 aufgehoben und es kann das Sieb 4 um die gewünschte Bandstrecke in Richtung des Pfeiles 28 mittels der Abzugseinrichtung 26 bewegt werden. Der entsprechende Bandabschnitt wird hierbei von der Siebrolle 27 abgezogen. Sobald die neue Bandpartie passend vor der Stützplatte 6 liegt, wird die Spanneinrichtung 16 wieder so betätigt, dass Zulaufgehäuse 2 und Lochplattenträger 12 gegeneinander gezogen werden. Das Sieb 4 wird dadurch zwischen dem Steg 14 und dem Steg 13 bzw. dem Lochplattenrand 55 wieder dichtend eingeklemmt. Sobald dies erfolgt ist, wird der Schieber 31 wieder in seine Offenstellung gebracht, sodass die Schnecke 14 wieder Material zum Sieb 4 fördern kann. Zugleich mit der Bewegung des Schiebers 31 wird der Kolben 38 gegen die Schnecke 24 zu bewegt und drückt daher das im Speicherraum 36 befindliche Material in den Zulaufkanal 3 ein. Jeglicher Materialrest wird durch die Gänge der Schnecke von der Stirnfläche 43 des Kolbens 38 abgeschabt, sodass keine Verkokung des Materials auftreten kann.

Die zeitliche Abstimmung der Bewegungen des Schiebers 31, des Kolbens 38 und der Spanneinrichtung 16 kann durch eine geeignete Steuerung, zweckmäßig auf elektronischem Wege, leicht erzielt werden. Durch geeignete Ventile läßt sich auch erreichen, dass die erwähnten Bewegungen von einem einzigen Antrieb abgeleitet werden, sodass also die Antriebe 47, 49 und 51 vereinigt werden können. Konstruktiv wird dies erleichtert, wenn die Bewegungsrichtungen des Schiebers 31 und des Kolbens 38 zueinander parallel liegen.

## Patentansprüche

1. Vorrichtung zur Filtrierung viskosen Materiales, insbesondere thermoplastischen Kunststoffmateriales, mit einer Einrichtung (23), insbesondere einer Schnecke (24), welche das zu reinigende Material aus einem Zustromkanal (3) eines Zulaufgehäuses (2) gegen ein bandförmiges Sieb (4) drückt, das abstromseitig durch eine Lochplatte (6) gegen den Druck des zuströmenden Materiales abgestützt und quer zur Flußrichtung des zu reinigenden Materiales zwecks Ersatzes eines verunreinigten Bandabschnittes durch einen neuen Bandabschnitt verschiebbar ist, wobei eine Einrichtung zur Erleichterung dieser Verschiebung vorhanden ist, welche Einrichtung einen an den Zustromkanal (3) angeschlossenen Speicherraum (36) für zu reinigendes Material aufweist, in welchem Speicherraum (36) ein Kolben (38) dichtend geführt ist, der durch einen Antrieb hin- und her bewegbar ist und in seiner vorgeschobenen Stellung den Speicherraum (36) gegen den Zustromkanal (3) abschließt, **dadurch gekennzeichnet, dass** die Einrichtung zur Erleichterung der Verschiebung des Siebes (4) zusätzlich zum Kolben (38) des Speicherraumes (36) eine zustromseitig des Siebes (4) angeordnete Verschlusseinrichtung (30) aufweist, durch welche der Zustromkanal (3) für das zu filtrierende Material zumindest großteils absperrbar ist, und welche - in Flussrichtung des zu reinigenden Materiales gesehen - zwischen dem Speicherraum (36) und dem Sieb (4) angeordnet ist.

2. Vorrichtung nach Anspruch 1, **dadurch gekennzeichnet, dass** die Lochplatte (6) oder ein zu ihrer Halterung dienender Lochplattenträger (12) durch eine lösbare Spanneinrichtung (16) gegen das Zulaufgehäuse(2) gedrückt wird, wobei das zwischen Lochplattenträger (12) und Zulaufgehäuse (2) hindurchgeführte Sieb (4) in der Spannstellung der Spanneinrichtung (16) dicht gehalten ist.

3. Vorrichtung nach Anspruch 2, **dadurch gekennzeichnet, dass** die Spanneinrichtung (16) von Hydraulikzylindern (17) gebildet ist.

4. Vorrichtung nach einem der Ansprüche 1 bis 3, **dadurch gekennzeichnet, dass** die dem Zustromkanal (3) zugewandte Stirnfläche (43) des unverdrehbaren Kolbens (38) gleich geformt ist wie die Innenwand (25) des Gehäuses der Schnecke (24), sodass in der vorgeschobenen Stellung des Kolbens (38) dessen Stirnfläche (43) von den Gängen der Schnecke (24) bestrichen wird.

5. Vorrichtung nach einem der Ansprüche 1 bis 4, **dadurch gekennzeichnet, dass** die Verschlusseinrichtung (30) von einem quer zur Achse des Zustromkanales (3) beweglichen Schieber (31) gebildet ist.

6. Vorrichtung nach Anspruch 5, **dadurch gekennzeichnet, dass** die Bewegungsrichtung des Schiebers (31) parallel liegt zur Bewegungsrichtung des Kolbens (38).

7. Vorrichtung nach Anspruch 5 oder 6, **dadurch gekennzeichnet, dass** die Bewegungen des Schiebers (31) und des Kolbens (38) und gegebenenfalls auch der Spanneinrichtung (16) von einem gemeinsamen Antrieb abgeleitet sind.

8. Vorrichtung nach einem der Ansprüche 1 bis 7, **dadurch gekennzeichnet, dass** die Lochplatte (6) an ihrer dem Sieb (4) zugewandten Seite eine flache Mulde (44) aufweist.

9. Vorrichtung nach einem der Ansprüche 1 bis 8, **dadurch gekennzeichnet, dass** das Zulaufgehäuse (2) und der Lochplattenträger (12) relativ zueinander in Axialrichtung des Zustromkanales (3) verschiebbar sind.

10. Vorrichtung nach Anspruch 9, **dadurch gekennzeichnet, dass** zur Relativverschiebung des Zulaufgehäuses (2) und der Lochplatte (6) bzw. des Lochplattenträgers (12) die Spanneinrichtung (16) dient.

11. Verfahren zum Siebabschnittwechsel bei der Filtrierung viskosen Materiales, insbesondere in den strömungsfähigen Zustand versetzten Kunststoffmateriales, welches in einem Zustromkanal (3) mittels einer Fördereinrichtung, insbesondere einer Schnecke (24), unter Druck der Zustromseite des bandförmigen Filtersiebes (4) zugeführt wird, von welchem ein Abschnitt während des Filtriervorganges nach außen abgedichtet gehalten wird, wogegen beim Siebabschnittwechsel die Abdichtung des Siebbandes aufgehoben und dann das Siebband quer zur Fließrichtung des zu filtrierenden Materiales verschoben wird, bis der verschmutzte Bandabschnitt durch einen neuen Bandabschnitt ersetzt ist, worauf dann die Abdichtung dieses neuen Bandabschnittes nach außen wieder hergestellt wird, wobei während der Verschiebung des Siebbandes das Einströmen des zu filtrierenden Materiales in einen an den Zustromkanal (3) angeschlossenen Speicherraum (36) ermöglicht wird, **dadurch gekennzeichnet, dass** der Zustrom zu filtrierenden Materiales zum Siebband stark gedrosselt, vorzugsweise ganz abgesperrt, wird, dass im wesentlichen zeitgleich hiemit zustromseitig der Drossel- bzw. Absperrstelle das Einströmen des zu filtrierenden Materiales in den Speicherraum ermöglicht wird, und kurz nach Drosselung bzw. Absperrung des Zustromes zum Siebband dessen Abdichtung aufgehoben und das Sieb (4) verschoben wird, worauf nach Wiederherstellung der Bandabdichtung der Zustrom des zu filtrierenden Materiales zum Siebband wieder freigegeben wird, wobei das in den Speicherraum (36) eingetretene Material aus dem Speicherraum ausgetrieben und zustromseitig der Drossel- bzw. Absperrstelle in den zum Siebband strömenden Materialfluss wieder eingebracht wird.

## Claims

1. Apparatus for the filtration of viscous material, in particular thermoplastic plastics material, with a device (23), in particular a screw (24), which presses the material to be cleaned out of an inflow duct (3) in a supply casing (2) against a screen (4) in the form of a belt which is supported on the outflow side by a perforated plate (6) against the pressure of the material flowing in and which is displaceable transversely to the flow direction of the material to be cleaned in order to replace a soiled portion of the belt with a new portion of the belt, wherein a device for facilitating this displacement is present, which device has a storage space (36) connected to the inflow duct (3) for material to be cleaned, in which storage space (36) a piston (38) is guided in a sealed manner which is movable by a drive so as to reciprocate and in its advanced position closes the storage space (36) off from the inflow duct (3), **characterized in that** the device for facilitating the displacement of the screen (4) has, in addition to the piston (38) of the storage space (36), a closure device (30) which is arranged on the inflow side of the screen (4) and by which the inflow duct (3) for the material to be filtered is capable of being shut off at least for the greater part and which is arranged between the storage space (36) and the screen (4) as viewed in the flow direction of the material to be cleaned.

2. Apparatus according to Claim 1, **characterized in that** the perforated plate (6) or a perforated-plate support (12) used for holding the latter is pressed by a releasable clamping device (16) against the supply casing (2), wherein the screen (4) extending through between the perforated-plate support (12) and the supply casing (2) is held in the clamping position of the clamping device (16) in a sealed manner.

3. Apparatus according to Claim 2, **characterized in that** the clamping device (16) is formed by hydraulic cylinders (17).

4. Apparatus according to one of Claims 1 to 3, **characterized in that** the end face (43), facing the inflow duct (3), of the non-rotatable piston (38) is shaped in the same way as the inner wall (25) of the casing of the screw (24), so that in the advanced position of the piston (38) the end face (43) of the latter is covered by the threads of the screw (24).

5. Apparatus according to one of Claims 1 to 4, **characterized in that** the closure device (30) is formed by a slide (31) movable transversely to the axis of the inflow duct (3).

6. Apparatus according to Claim 5, **characterized in that** the direction of movement of the slide (31) is parallel to the direction of movement of the piston (38).

7. Apparatus according to Claim 5 or 6, **characterized in that** the movements of the slide (31) and of the piston (38) and optionally also of the clamping device (16) are taken off a common drive.

8. Apparatus according to one of Claims 1 to 7, **characterized in that** the side of the perforated plate (6) facing the screen (4) has a shallow recess (44).

9. Apparatus according to one of Claims 1 to 8, **characterized in that** the supply casing (2) and the perforated-plate support (12) are displaceable relative to each other in the axial direction of the inflow duct (3).

10. Apparatus according to Claim 9, **characterized in that** the clamping device (16) is used for the relative displacement of the supply casing (2) and the perforated plate (6) or the perforated-plate support (12) respectively.

11. A method of changing a portion of a screen during the filtration of viscous material, in particular plastics material put into a state capable of flowing, which material is fed in an inflow duct (3) by means a conveying device, in particular a screw (24), under pressure to the inflow side of the filter screen (4) in the form of a belt, of which a portion is kept sealed off from the outside during the filtration procedure, whereas when the portion of the screen is changed the sealing of the screen belt is discontinued and then the screen belt is displaced transversely to the flow direction of the material to be filtered until the soiled portion of the belt is replaced with a new portion of the belt, after which the sealing of the said new portion of the belt towards the outside is restored, wherein during the displacement of the screen belt the material to be filtered is permitted to flow into a storage space (36) connected to the inflow duct (3), **characterized in that** the inflow of material to be filtered to the screen belt is heavily throttled, and preferably shut off completely, the material to be filtered is permitted to flow into the storage space on the inflow side of the throttling or shut-off point substantially simultaneously with the said throttling or shutting off, and, shortly after the inflow to the screen belt has been throttled or shut off, the sealing of the said screen belt is discontinued and the screen (4) is displaced, whereupon, after the sealing of the belt has been restored, the inflow of the material to be filtered to the screen belt is freed again, wherein the material which has entered the storage space (36) is expelled from the storage space and is introduced again into the flow of material flowing towards the screen belt on the inflow side of the throttling or shut-off point.

## Revendications

1. Dispositif pour filtrer une matière visqueuse, notamment une matière thermoplastique, avec un équipement (23), notamment une vis sans fin (24), qui pousse la matière à purifier, provenant d'un canal de flux entrant (3) d'un carter d'admission (2), vers un tamis (4) en forme de bande qui est soutenu du côté du flux sortant par une plaque à trous (6) contre la pression de la matière entrante et qui peut être déplacé transversalement à la direction d'écoulement de la matière à purifier afin de remplacer un tronçon de bande souillé par un tronçon de bande neuf, sachant qu'un équipement est présent pour faciliter ce déplacement, équipement qui présente un espace de stockage (36) pour la matière à purifier qui est raccordé au canal de flux entrant (3), espace dans lequel est guidé en étanchéité un piston (38) qui peut être déplacé en va-et-vient par un entraînement et qui, dans sa position avancée, ferme l'espace de stockage (36) vis-à-vis du canal de flux entrant (3), **caractérisé en ce que** l'équipement pour faciliter le déplacement du tamis (4) présente, en plus du piston (38) de l'espace de stockage (36), un équipement de fermeture (30) disposé en amont du tamis (4), équipement par lequel le canal de flux entrant (3) peut être fermé au moins en grande partie vis-à-vis de la matière à filtrer, et équipement qui est disposé - considéré dans la direction d'écoulement de la matière à purifier - entre l'espace de stockage (36) et le tamis (4).

2. Dispositif selon la revendication 1, **caractérisé en ce que** la plaque à trous (6) ou un support (12) de plaque à trous servant à la maintenir est pressé par un équipement de serrage amovible (16) contre le carter d'admission (2), sachant que le tamis (4) dirigé entre le support (12) de plaque à trous et le carter d'admission (2) est maintenu en étanchéité dans la position de serrage de l'équipement de serrage (16).

3. Dispositif selon la revendication 2, **caractérisé en ce que** l'équipement de serrage (16) est formé par des vérins hydrauliques (17).

4. Dispositif selon l'une des revendications 1 à 3, **caractérisé en ce que** la face frontale (43) du piston non rotatif (38) qui est tournée vers le canal de flux entrant (3) est réalisée de même forme que la paroi intérieure (25) du carter de la vis sans fin (24), de sorte que, dans la position avancée du piston (38), sa face frontale (43) est balayée par les spires de la vis sans fin (24).

5. Dispositif selon l'une des revendications 1 à 4, **caractérisé en ce que** l'équipement de fermeture (30) est formé par un tiroir (31) mobile transversalement à l'axe du canal de flux entrant (3).

6. Dispositif selon la revendication 5, **caractérisé en ce que** la direction de déplacement du tiroir (31) est parallèle à la direction de déplacement du piston (38).

7. Dispositif selon la revendication 5 ou 6, **caractérisé en ce que** les déplacements du tiroir (31) et du piston (38), et éventuellement aussi de l'équipement de serrage (16), sont tirés d'un entraînement commun.

8. Dispositif selon l'une des revendications 1 à 7, **caractérisé en ce que** la plaque à trous (6) présente une dépression plate (44) sur son côté tourné vers le tamis (4).

9. Dispositif selon l'une des revendications 1 à 8, **caractérisé en ce que** le carter d'admission (2) et le support (12) de plaque à trous peuvent être déplacés l'un par rapport à l'autre dans la direction axiale du canal de flux entrant (3).

10. Dispositif selon la revendication 9, **caractérisé en ce que** l'équipement de serrage (16) sert au déplacement relatif du carter d'admission (2) et de la plaque à trous (6) ou encore du support (12) de plaque à trous.

11. Procédé de remplacement d'un tronçon de tamis lors de la filtration d'une matière visqueuse, notamment de matière plastique mise à l'état coulant, qui est apportée sous pression dans un canal de flux entrant (3) au moyen d'un équipement convoyeur, notamment d'une vis sans fin (24), au côté amont du tamis filtrant (4) en forme de bande, dont un tronçon est maintenu étanché vis-à-vis de l'extérieur pendant le processus de filtration, tandis que lors du remplacement du tronçon de tamis, l'étanchement de la bande de tamis est supprimé puis la bande de tamis est déplacée transversalement à la direction d'écoulement de la matière à filtrer jusqu'à ce que le tronçon de bande souillé soit remplacé par un tronçon de bande neuf, à la suite de quoi l'étanchement de ce nouveau tronçon de bande vis-à-vis de l'extérieur est rétabli, sachant que pendant le déplacement du tronçon de bande, la matière à filtrer peut s'écouler dans un espace de stockage (36) raccordé au canal de flux entrant (3), **caractérisé en ce que** le flux de matière à filtrer allant vers la bande de tamis est fortement étranglé, de préférence totalement fermé, **en ce que**, sensiblement dans le même temps, en amont du point d'étranglement ou de fermeture, l'écoulement de la matière à filtrer dans l'espace de stockage est rendu possible, et peu après l'étranglement ou la fermeture du flux allant vers la bande de tamis, l'étanchement de cette dernière est supprimé et le tamis (4) est déplacé, à la suite de quoi, après avoir rétabli l'étanchement de la bande, le flux de matière à filtrer allant vers la bande de tamis est à nouveau libéré, sachant que la matière qui est entrée dans l'espace de stockage (36) est expulsée de l'espace de stockage et réintroduite, en amont du point d'étranglement ou de fermeture, dans le flux de matière s'écoulant vers la bande de tamis.
